# EUROPÄISCHE PATENTANMELDUNG

(11) **EP 0 613 860 A1**
(43) Veröffentlichungstag der Anmeldung: **07.09.1994**
(21) Anmeldenummer: 94103075.1
(22) Anmeldetag: 02.03.1994
(51) Int. Cl.: C02F 1/04, B01D 3/34

(54) **Vorrichtung und Verfahren zur Volumenreduzierung von wässerigem, nicht verdampfbare Bestandteile enthaltendes Prozesswasser**

(30) Priorität: 03.03.1993 DE 9303026 U; 19.05.1993 DE 4316785
(71) Anmelder: Konstanzer, Peter, D-70195 Stuttgart (DE)
(72) Erfinder: Konstanzer, Peter, D-70195 Stuttgart (DE)

(57) **Zusammenfassung**

Eine Vorrichtung (10) zur Volumenreduzierung von wässerigem, nicht verdampfbare Bestandteile enthaltendes Prozeßwasser (42), insbesondere Lösungen aus fotographischen Prozessen weist eine Verdampfungskammer (16) auf, in der das Prozeßwasser (42) durch Abdampfen von Wasser volumenreduzierbar und konzentrierbar ist. Um eine einfach aufgebaute und eine energiesparende Volumenreduzierung zu erreichen wird vorgeschlagen, daß der Verdampfungskammer (16) Luft derart zugeführt wird, daß eine Oberflächenvergrößerung des Prozeßwassers (42) erfolgt, und daß die Verdampfungskammer (16) mit zumindest einer Auslaßöffnung (34) versehen ist, deren Auslaßquerschnitt so bemessen ist, daß durch die der Verdampfungskammer (16) zugeführte Luftmenge (38) gegenüber der Außenwelt der Verdampfungskammer (16) ein Überdruck p_{V} entsteht.

## Beschreibung

Die Erfindung betrifft eine Vorrichtung zur Volumenreduzierung von wässerigem, nicht verdampfbare Bestandteile enthaltendes Prozeßwasser, insbesondere Lösungen aus fotographischen Prozessen, mit einer Verdampfungskammer, in der das Prozeßwasser durch Abdampfen von Wasser volumenreduzierbar und konzentrierbar ist.

Die Erfindung betrifft ferner ein Verfahren zur Volumenreduzierung von wässerigem, nicht verdampfbare Bestandteile enthaltendes Prozeßwasser, insbesondere Lösungen aus fotographischen Prozessen, bei dem in einer Verdampfungskammer durch Abdampfen von Wasser das Volumen des Prozeßwassers reduziert und dieses dabei konzentriert wird.

Eine derartige Vorrichtung und ein derartiges Verfahren ist aus der Praxis bekannt.

Wässerige Prozeßwässer, die nicht verdampfbare, meist anorganische Bestandteile in Form von Salzen enthalten, fallen in zahlreichen technischen Prozessen an. Ein typisches Beispiel ist ein in einem fotographischen Prozeß anfallendes Prozeßwasser, beispielsweise eine Entwicklerlösung.

Üblicherweise werden neue, noch nicht gebrauchte Entwickler für fotographische Prozesse, beispielsweise in fotographischen Entwicklungslaboratorien oder bei Entwicklern für die Lith- und Line-Chemie, in konzentrierter Form angeboten. Der flüssige, konzentrierte Entwickler wird mit vier Teilen Wasser vor Einführen in den fotographischen Prozeß verdünnt.

Das bedeutet, es ist gegenüber der angelieferten konzentrierten Flüssigkeitsmenge des Entwicklers die 5-fache Menge an Prozeßwasser zu entsorgen. Die Entsorgung des volumenreichen Prozeßwassers ist sehr aufwendig, beispielsweise werden entsprechende Stauräume und Behältnisse benötigt, und entsprechend großvolumige Transportmittel zum Überbringen zu einer Entsorgung oder einer Aufarbeitungsanlage. Bei der Entsorgung durch Endlagerung dieser Prozeßwässer, die an sich relativ geringe Konzentrationen an Salzen oder dgl. enthalten, entstehen erhebliche Probleme aufgrund der großen Volumina.

Es wurde nunmehr versucht, derartige Prozeßwässer zu sammeln und in Kesseln mit einem Fassungsvermögen von mehreren hundert Litern zu erhitzen, um dadurch Wasser abzudampfen und eine Reduzierung und Konzentrierung des Abwassers zu erreichen.

Die Vorrichtungen sind baulich sehr aufwendig und benötigen einen hohen Einsatz an Heizenergie, um das Wasser zu verdampfen. So ist es beispielsweise üblich, die Behälter von außen her zu beheizen, wodurch eine erhebliche Wärmemenge ungenutzt durch Abstrahlung an die Umwelt verlorengeht. Die Verfahrensweise ist ferner umständlich und löst auch nicht das logistische Problem des Zwischenlagerns bzw. Sammelns und Abtransportierens der an den Anlagen unmittelbar entstandenen oder anfallenden Prozeßwässern.

Aufgabe der vorliegenden Erfindung ist daher, eine Vorrichtung und ein Verfahren der eingangs genannten Art zu schaffen, um mit konstruktiv einfachen Mitteln und mit energiesparenden Maßnahmen eine Volumenreduzierung zu erreichen, um insgesamt eine Vereinfachung der Entsorgung derartiger Prozeßwässer zu schaffen.

Erfindungsgemäß wird die Aufgabe bei einer Vorrichtung dadurch gelöst, daß der Verdampfungskammer Luft derart zugeführt wird, daß eine Oberflächenvergrößerung erfolgt, und daß die Verdampfungskammer mit zumindest einer Auslaßöffnung versehen ist, deren Auslaßquerschnitt so bemessen ist, daß durch die der Verdampfungskammer zugeführte Luftmenge gegenüber der Außenwelt der Verdampfungskammer ein Überdruck entsteht.

Bei einem Verfahren wird die Aufgabe dadurch gelöst, daß der Verdampfungskammer Luft derart zugeführt wird, daß eine Oberflächenvergrößerung des Prozeßwassers erfolgt, und, daß die zugeführte Luftmenge derart abgeführt wird, daß in der Verdampfungskammer gegenüber der Außenwelt ein Überdruck besteht.

Die erfindungsgemäße Aufgabe wird deswegen vollkommen gelöst, da durch die Oberflächenvergrößerung des Prozeßwassers in der Verdampfungskammer entsprechend mehr Wasserdampf aus dieser Oberfläche austreten kann. Eine Wasseroberfläche steht in einem thermodynamischen Gleichgewicht mit dem über dieser Wasseroberfläche vorhandenen Wasserdampf, der dadurch entsteht, daß energiereiche Wassermoleküle aus der Wasseroberfläche austreten, und zum Teil wieder in die Wasseroberfläche zurückfallen. Der dadurch entstehende Dampfdruck des Wassers ist temperaturabhängig, die absolute Menge an Dampf jedoch abhängig von der Größe der Wasseroberfläche. Durch die Vergrößerung der Oberfläche des Prozeßwassers in der Verdampfungskammer wird also bei einer bestimmten Temperatur erreicht, daß absolut gesehen, ein höherer Wasseranteil in Dampfform in der Verdampfungskammer vorliegt. Somit kann in der Verdampfungskammer bei relativ niederen Temperaturen gearbeitet werden, um eine bestimmte Wassermenge der Oberfläche des Prozeßwassers pro Zeiteinheit zu entziehen. Dadurch entfallen dann energieaufwendige Heizungsmaßnahmen. Die zugeführte Luft dient aber nicht nur dazu, um die Oberflächenvergrößerung zu schaffen, sondern diese zugeführte Luftmenge sorgt zugleich auch für den Abtransport der über der Wasserfläche ausgedampften Wassermoleküle in Richtung der Auslaßöffnung. Dadurch wird das thermodynamische Gleichgewicht zwischen ausgetretenen Wassermolekülen in Form von Dampf und der entsprechenden Flüssigkeitsmenge gestört, mit der Folge, daß zur Herstellung dieses thermodynamischen Gleichgewichts wieder Wasser aus der Flüssigkeit austritt. Die zugeführte Luftmenge erfüllt also eine Doppelfunktion, zum einen Vergrößerung der Oberfläche und zum anderen Abtransport der als Dampf ausgetretenen Wassermoleküle. Durch Bemessung des Querschnittes der Auslaßöffnung derart, daß in der Verdampfungskammer gegenüber der Außenwelt ein Überdruck entsteht, ist festgestellt worden, daß bei gleichem Fremdenergieeinsatz eine raschere Volumenreduzierung bzw. ein rascheres Abdampfen erzielt werden kann, als bei einer offenen Verdampfungskammer ohne gegenüber der Außenwelt erhöhten Druck.

So wurde festgestellt, daß bei sonst gleichen Bedingungen, bei offenen Systemen, also ohne daß ein erhöhter Druck in der Druckkammer existiert, nur eine wesentlich langsamere Volumenreduzierung möglich ist. Dies ist deswegen überraschend, da nach den Gesetzen der Thermodynamik eine Druckerhöhung zu einem geringeren Ausdampfen von Wasser führen müßte, was aber überraschenderweise nicht der Fall ist. Der Überdruck in der Verdampfungskammer, die auch als Druckkammer bezeichnet werden kann, ermöglicht über die Auslaßöffnung ein gezieltes und rasches Abführen des abgedampften Wassers unter Druck. Im Druckraum selbst kann ein intensives Vermischen des über der Oberfläche abdampfenden Wasser mit ggf. an den Wänden der Verdampfungskammer kondensierten und rücklaufenden Wassers beobachtet werden, was letztendlich dazu führt, daß das austretende Wasser sehr rein ist (ein einer Rückflußdestillation vergleichbare Effekt). Bei einem offenen System, also bei einem System mit einem Luftdruck über der Prozeßwasseroberfläche, der in etwa dem Umgebungsdruck entspricht, ist nicht auszuschließen, daß mikroskopisch kleine Teile durch die mechanische Einwirkung der zugeführten Luft mit in die Umwelt abgeführt werden.

Durch die gegenüber einem völlig offenen System nunmehr wesentlich reduzierte Austrittsquerschnittsfläche der Auslaßöffnung, die in Zusammenwirkung mit der zugeführten Luft für den Überdruck in der Verdampfungskammer sorgt, ist rein statistisch gesehen die Wahrscheinlichkeit, daß durch diese Auslaßöffnung derartig mitgerissene Teile austreten, so gering, daß diese geringe Mengen ökologisch unbedenklich sind. Es ist somit durch konstruktiv einfache und energiebilanzmäßig günstige Maßnahmen möglich, ohne eine Anhebung der Temperatur des Prozeßwasser bis in den Bereich des Siedepunktes des Wassers, bei einer bestimmten Verdampfungskammergröße eine bestimmte Menge an Wasser abzudampfen, um dadurch eine Volumenreduzierung und Aufkonzentrierung des Prozeßwassers zu erreichen.

In einer besonderen Ausgestaltung der Erfindung wird der Verdampfungskammer ein auf die Oberfläche des darin enthaltenden Prozeßwassers gerichteter Luftstrahl zugeführt.

Diese Maßnahme hat nun den besonderen Vorteil, daß durch eine konstruktiv sehr einfache Maßnahme die Oberflächenvergrößerung erzielt werden kann, wobei je nach Ausrichtung und Größe des Lufttstrahles die gewünschte Oberflächenvergrößerung erzielt werden kann. Darüberhinaus hat diese Maßnahme noch den erheblichen Vorteil, daß die von der Oberfläche abgeprallten Luftmengen zugleich das von der Oberfläche ausdampfende Wasser mitreißen und dieses aus der Verdampfungskammer abführen. Durch Wechselwirkung der bewegten Luftmoleküle mit den ausgedampften Wassermolekülen kann diesen die notwendige Energie zum Abführen von der Oberfläche zugeführt werden, ohne daß dies durch Wärmezufuhr geschehen muß. In Kombination mit der Druckerhöhung wurde in vorteilhafter Weise festgestellt, daß im Auftreffbereich des Luftstrahles auf die Oberfläche des Prozeßwassers keine starken lokalen Unterkühlungen stattfinden, wie das bei offenen Systemen beobachtet wurde.

In einer weiteren Ausgestaltung ist ein Gebläse zur Zuführung des Luftstrahles vorgesehen.

Diese Maßnahme hat nun den erheblichen Vorteil, daß über konstruktiv einfache und baulich wenig aufwendige Mittel der Luftstrahl zur Oberflächenvergrößerung erzeugt werden kann, wobei ein derartiges Gebläse energiesparend betrieben werden kann.

In einer weiteren Ausgestaltung der Erfindung ist die Verdampfungskammer eine kontinuierlich beschickbare Kammer.

Diese Maßnahme hat nun den erheblichen Vorteil, daß die Vorrichtung unmittelbar mit einer Anlage, die das Prozeßwasser erzeugt, gekoppelt werden kann. So können dann kontinuierlich anfallende Prozeßwasser kontinuierlich von der Vorrichtung volumenreduziert bzw. konzentriert werden. Es wird so verfahren, daß die Volumenreduzierleistung der erfindungsgemäßen Vorrichtung an die Menge des kontinuierlich anfallenden Prozeßwassers angepaßt wird, so daß, direkt vor Ort, das anfallende Prozeßwasser im Volumen reduziert bzw. konzentriert werden kann. Greift man auf das eingangs erwähnte Beispiel einer Entwicklerlösung in einem fotographischen Prozeß zurück, so ist es möglich, das anfallende Prozeßwasser um 80 % seines Volumens zu reduzieren, so daß eine Menge an Prozeßwasser erhalten wird, die der ursprünglich eingesetzten Flüssigkeitsmenge an Entwickler entspricht. Es kann dann das so konzentrierte Prozeßwasser beispielsweise in die selben Behältnisse wieder abgefüllt werden, in der der ursprüngliche Entwickler angeliefert wurde, so daß keine zusätzlichen Staubehälter oder zusätzlicher Stauraum oder dgl. benötigt wird. Da die abzuführende Prozeßwassermenge, nach der Volumenreduzierung, der eingesetzten Entwicklermenge entspricht, kann das volumenreduzierte Prozeßwasser beispielsweise beim Anliefern von neuem Entwickler entsorgt werden, ohne daß dabei besondere zusätzliche Staumaßnahmen bei dem entsprechenden Fahrzeug vorgesehen werden müssen. Es ist beispielsweise auch möglich, die Vorrichtung nachträglich noch an derartige Prozeßwässer erzeugende Anlagen anzubauen.

In einer weiteren Ausgestaltung der Erfindung ist eine Vorkammer vorgesehen, der das Prozeßwasser zugeführt wird, und die Vorkammer steht bezüglich Flüssigkeiten kommunizierend mit der Verdampfungskammer in Verbindung, ist jedoch gegenüber der der Verdampfungskammer zugeführten Luftmenge getrennt.

Diese Maßnahme hat nun den erheblichen Vorteil, daß die Vorkammer nicht unter Druck steht, somit ein solcher Überdruck auch nicht auf die Leitungen einwirken kann, die das Prozeßwasser aus einer Anlage abführen. Ein erhöhter Druck könnte zur Folge haben, daß bei Druckschwankungen das aus den Leitungen abgeführte Prozeßwasser in diesen wieder zurückgedrückt und dabei beispielsweise den Prozeß in der Anlage stören würden. Dadurch, daß die vorgeschaltete Vorkammer jedoch bezüglich Flüssigkeit strömungstechnisch mit der Verdampfungskammer in Verbindung steht, wird das der Vorkammer zugeführte Prozeßwasser nach dem Prinzip der kommunizierenden Röhren in die Verdampfungskammer überführt. Somit wird eine Entkopplung zwischen Verdampfungskammer und Austrittsöffnung der Anlage, die das Prozeßwasser abgibt, erreicht.

In einer weiteren Ausgestaltung der Erfindung sind Vorkammer und Verdampfungskammer über eine Trennwand getrennt, die zumindest eine unterhalb des Flüssigkeitsniveaus liegende Öffnung aufweist, über die die beiden Kammern miteinander kommunizieren.

Diese Maßnahme hat nun den Vorteil, daß durch die Trennwand über besonders konstruktiv einfache Maßnahmen die beiden Kammern zum einen getrennt bzw. in kommunizierender Verbindung stehen, so daß letztendlich daraus eine kompakte raumsparende Bauweise der Vorrichtung resultiert.

In einer weiteren Ausgestaltung der Erfindung weist die Verdampfungskammer eine geneigte Deckelwand auf, die mit der zumindest eine Auslaßöffnung versehen ist.

Durch die Neigung der Deckelwand werden an deren Unterseite kondensierte Flüssigkeitstropfen aufgrund der Schwerkraft in einer gezielten Richtung abgeführt bzw. können dadurch gesteuert in die Flüssigkeit zurücktropfen. In unmittelbarer Nähe der Deckelwand herrscht gegenüber den Bereichen unmittelbar über der Wasseroberfläche, relativ gesehen, ein Unterdruck, so daß dort eine Ausdehnung des Luft/Wassergemisches möglich ist, wodurch sich die Wasserpartikel oder Tropfen mit dem Luftstrom besser vermischen und aus der Verdampfungskammer abgeführt werden können.

In einer weiteren Ausgestaltung der Erfindung ist die geneigte Deckelwand abnehmbar.

Dies hat nun beachtliche Vorteile im Hinblick auf die praktische Handhabung, d.h. zu Befüllungs- oder Entleerungszwecken oder auch zu Reinigungs- und Inspektionszwecken kann die Deckelwand einfach abgenommen werden.

In einer weiteren Ausgestaltung der Erfindung beträgt der Austrittsquerschnitt der zumindest einen Auslaßöffnung in der Deckelwand etwa 10 bis 20 % der Fläche der Deckelwand.

In diesem Bereich kann, bei entsprechender Größe der Vorrichtung, mit einem relativ schwachen Gebläse gearbeitet werden, um einen ausreichenden Überdruck in der Verdampfungskammer zu erzielen, um dadurch bei Einsatz von möglichst wenig Energie (zum Betrieb des Gebläses) möglichst hohe Abführraten an Wasser zu erhalten.

In einer weiteren Ausgestaltung ist eine Heizung vorgesehen, die im Prozeßwasser angeordnet ist.

Durch das Vorsehen der Heizung ist es möglich, das Prozeßwasser in geringem Maße zu erwärmen, ohne dabei in Richtung eines Kochens zu fahren, um in einem optimalen Temperaturbereich, beispielsweise 30 bis 40°C zu arbeiten. Darüberhinaus können dadurch Temperaturschwankungen ausgeglichen werden, die beispielsweise beim Anfahren der Vorrichtung oder beim Anfahren der das Prozeßwasser erzeugenden Anlage erfolgen können.

In einer weiteren Ausgestaltung der Erfindung ist eine Entleervorrichtung vorgesehen, die zugleich als Steigrohr/SchwerkraftÜberlaufsicherung ausgebildet ist.

Diese Maßnahme ist insbesondere in Zusammenhang mit der kontinuierlich arbeitenden Arbeitsweise von Vorteil. Wird beispielsweise aufgrund einer Störung eine Übermenge an Prozeßwasser zugeführt, kann über die Steigrohrvorrichtung die Übermenge ablaufen. Es ist selbstverständlich möglich, diese Steigrohrentleervorrichtung auch lediglich zum Entleeren der Verdampfungskammer nach Erreichen eines bestimmten Konzentrationsgrades einzusetzen.

In einer weiteren Ausgestaltung der Erfindung führt vom Bodenbereich der Verdampfungskammer eine Steigleitung ab, die auf Höhe des maximalen Flüssigkeitsniveaus der Verdampfungskammer, nach unten abknickt und so bemessen ist, daß bei geringer Überschreitung des maximalen Flüssigkeitsniveaus ein kontinuierlicher Ablauf gerade dieser überschüssigen Menge ermöglicht, bei starker Überschreitung jedoch eine vollständige Entleerung der Verdampfungskammer verursacht.

Diese Maßnahme hat den Vorteil, daß Schwankungen in der Zufuhr des Prozeßwassers in geringem Umfange durch Ablaufen über die Steigrohrleitung ausgeglichen werden können, wobei die dadurch möglicherweise noch nicht ausreichend konzentrierten überschüssigen abgelaufenen Mengen das Gesamtergebnis bezüglich Volumenreduktion und Konzentrierung nicht beeinflussen.

Wird jedoch ein bestimmtes Übermaß an Zulauf überschritten, wird über das Steigleitungsrohrprinzip die gesamte Verdampfungskammer entleert, so daß die Überschußmenge insgesamt abgeführt und die Vorrichtung wieder zum normalen Betrieb bereit steht. Dieses schlagartige Abführen kann auch als eine Funktionsstörung erfaßt werden oder auch als Warnsignal dienen, um dem Betreiber die Störung zu kundzutun. Es ist auch möglich, entsprechende Maßnahmen vorzusehen, um bei einer solchen schlagartigen Entleerung die ggf. noch nicht ausreichend konzentrierte Menge in einen Zwischenspeicher überzuführen, aus dem sie dann ggf. nach und nach der Verdampfungskammer zur Aufkonzentrierung bzw. Volumenreduzierung wieder zurückgeführt werden kann.

In einer weiteren Ausgestaltung der Erfindung ist in der Steigleitung eine Pumpe angeordnet, die, falls sie nicht in Betrieb ist, einen Durchlauf von Flüssigkeit ermöglicht.

Diese Maßnahme ist insbesondere in Zusammenhang mit der zuvor erwähnten Maßnahme besonders vorteilhaft, da trotz Vorhandensein der Pumpe ein kontinuierlicher Ab- oder Überlauf geringer Überschußmengen möglich ist. Das Vorsehen der Pumpe an sich ermöglicht zu beliebigen Zeitpunkten durch Einschalten der Pumpe eine wahlweise Entleerung der Verdampfungskammer.

In einer weiteren Ausgestaltung der Erfindung ist stromabwärts der Pumpe eine Abzweigung von dem Entleerungspfad vorgesehen, die zur Verdampfungskammer rückgeführt ist, so daß bei Betätigen der Pumpe ein Umwälzen der in der Verdampfungskammer aufgenommenen Flüssigkeitsmenge von der Verdampfungskammer, über die Steigleitung und die Abzweigungsleitung möglich ist.

Diese Maßnahme hat den Vorteil, daß durch das Umwälzen sich im Bodenbereich der Verdampfungskammer abgesetzte feine schlammartige Partikel kurz vor Entleeren der Verdampfungskammer umgewälzt und somit gleichmäßig in der Flüssigkeit verteilt werden können, so daß diese dann insgesamt mit der Flüssigkeit abgeführt werden können.

Besonders energiesparend wird die Volumenreduzierung dann durchgeführt, falls bei warmen Prozeßwasser das Verfahren unmittelbar anschließend an den Prozeß unter Nutzung der Wärme des Prozeßwasser durchgeführt wird.

Insbesondere bei Prozeßwässern aus fotographischen Prozessen hat sich besonders günstig ein Arbeitsbereich von 35 bis 40°C herausgestellt.

In einer weiteren Ausgestaltung der Erfindung weist die Entleervorrichtung ein Filtersystem auf, durch das Feststoffe vom aus der Verdampfungskammer abgeführten Flüssigkeit ausgefiltert werden.

Diese Maßnahme hat den Vorteil, daß durch das zusätzliche Filtersystem die Reduktion der Restchemie in der abgeführten Flüssigkeit auf ca. 5 bis 10 % trockenen Abfall reduziert werden kann. Durch das Filtersystem können auch bei der Abkühlung des Prozeßwassers ausfallende gelöste Feststoffe ausgefiltert werden, so daß dann lediglich flüssige Bestandteile in die abzutransportierenden Flüssigkeitsbehälter gelangen und dort kein heterogenes Fest/Flüssigkeitssystem vorherrscht.

In einer weiteren Ausgestaltung der Erfindung weist das Filtersystem einen abnehmbaren Filterbehälter auf, der zur Aufarbeitung und/oder Entsorgung des ausgefilterten Gutes getrennt handhabbar ist.

Diese Maßnahme hat den Vorteil, daß der abnehmbare Filterbehälter in eine dazu passende Transportkiste eingesetzt werden kann. Da Trockenchemie, wie sie nun im Filter enthalten ist, kein Gefahrengut darstellt, kann diese Transportkiste per Post/Paketdienst/oder Bahn versandt werden. Der Inhalt kann dann entsorgt und der wiederverwendbare Filterbehälter mit dieser Transportkiste zum Anwender zurückversandt werden und dann erneut eingesetzt werden. Dies ist ein weiterer Beitrag dazu, die Entsorgung derartiger Prozeßwasser im Sinne der gestellten Aufgabe zu vereinfachen.

In einer weiteren Ausgestaltung der Erfindung wird bis zum Erreichen einer gewünschten Temperatur des Prozeßwassers während einer Heizphase die Verdampfungskammer mit Unterdruck betrieben.

Diese Maßnahme hat nun den Vorteil, daß in den Heizphasen, beispielsweise wenn Prozeßwasser mit Temperaturen unter 25°C anfällt, mit Unterdruck gearbeitet wird, wobei dies einfach dadurch geschehen kann, daß das Gebläse, das den Luftstrahl in die Verdampfungskammer bei Normalbetrieb richtet, während der Heizphase als Sauggebläse geschaltet wird. Dadurch kann die Aufheizphase erheblich verkürzt werden. Bei Erreichen der Arbeitstemperatur wird das Gebläse dann wieder von Saugbetrieb auf Druckbetrieb geschaltet.

In einer weiteren Ausgestaltung der Erfindung wird während einer Heizphase das Prozeßwasser in der Verdampfungskammer umgewälzt.

Diese Maßnahme hat den Vorteil, daß ebenfalls die Heizphase verkürzt werden kann, und daß ein Festsetzen von Partikeln an Heizstäben vermieden werden kann.

Es versteht sich, daß die vorstehend genannten und die nachstehend noch zu erläuternden Maßnahmen nicht nur in den angegebenen Kombinationen, sondern auch in anderen Kombinationen oder in Alleinstellung einsetzbar sind, ohne den Rahmen der vorliegenden Erfindung zu verlassen.

Die Erfindung wird nachfolgend anhand eines ausgewählten Ausführungsbeispieles in Zusammenhang mit den beiliegenden Zeichnungen näher erläutert und beschrieben. Es zeigen:
- Fig. 1: stark schematisiert einen Querschnitt eines Ausführungsbeispiels einer erfindungsgemäßen Vorrichtung zur Volumenreduzierung von Abwässern aus fotographischen Prozessen;
- Fig. 2: eine teilweise, ebenfalls stark schematisierte perspektivische Seitenansicht der Vorrichtung (in der Darstellung von Fig. 1 von rechts) zur Demonstrierung der Arbeitsweise der erfindungsgemäßen Vorrichtung, und
- Fig. 3a und 3b: stark schematisierte Draufsichten auf die erfindungsgemäße Vorrichtung zur Erläuterung von Arbeitsprinzipien der erfindungsgemäßen Vorrichtung.

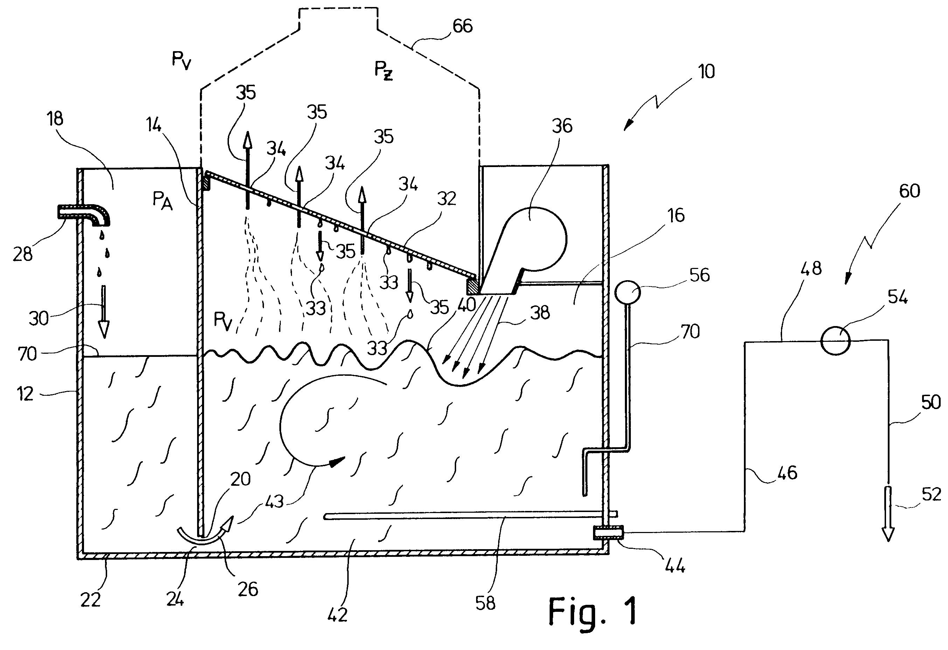

Eine in den Fig. 1 bis 3 dargestellte Vorrichtung dient zur Volumenreduzierung von wässerigen Entwicklerlösungen aus fotographischen Prozessen. Derartige Entwicklerlösungen enthalten eine Reihe an nicht verdampfbaren anorganischen und organischen Salzen und sind, gegenüber den ausgänglichen, von den Herstellern derartiger Entwicklerlösungen angebotenen Lösungen, etwa auf das 5-fache verdünnt.

Die in ihrer Gesamtheit mit der Bezugsziffer 10 bezeichnete Vorrichtung weist ein etwa quaderförmiges Gehäuse 12 auf, dessen Innenraum durch eine Trennwand 14 in eine Verdampfungskammer 16 und in eine Vorkammer 18 unterteilt ist.

Die Trennwand 14 erstreckt sich dabei parallel zu einer hier nicht bezeichneten Seitenwand des Gehäuses 12 und erstreckt sich von dessen oberem Ende bis in die Nähe des Bodens 22 des Gehäuses 12.

Somit endet eine Unterkante 20 der Trennwand 14 im Abstand zum Boden 22, wodurch eine Öffnung 24 entsteht, über die die Vorkammer 18 strömungstechnisch mit der Verdampfungskammer 16 verbunden ist.

Demzufolge kann Flüssigkeit aus der Vorkammer 18 über die Öffnung 24 in die Verdampfungskammer 16 eintreten, wie dies in Fig. 1 durch einen Pfeil 26 angedeutet ist.

Die Vorkammer 18 wird über einen Zulauf 28 gespeist, der mit einer Anlage in Verbindung steht, in der ein fotographischer Prozeß abläuft, bei dem als Prozeßwasser 42 eine verdünnte Entwicklerlösung anfällt. Bei diesem Prozeß fällt dieses Abwasser kontinuierlich an, im dargestellten Ausführungsbeispiel in einer Menge von etwa 150 cm³ pro Stunde und pro Anlage. Das in der Vorrichtung aufgenommene Prozeßwasser 42 fällt somit als Tropfen oder läuft als dünner Strahl aus dem Zulauf 28 in die Vorkammer 18 und anschließend über die Öffnung 24 in die Verdampfungskammer 16.

Die Verdampfungskammer 18 ist am oberen Ende mit einer geneigt verlaufenden abnehmbaren Deckelwand 32 versehen, in der verteilt mehrere Öffnungen 34 vorhanden sind.

Der Gesamtquerschnitt der Öffnungen 34 beträgt dabei etwa 15 % der gesamten Deckelwandfläche. Am oberen Endbereich der Verdampfungskammer 16 ist ferner ein Gebläse 36 angeordnet, das derart montiert ist, daß es Umgebungsluft ansaugen kann und diese als gebündelten Luftstrahl 38 auf die Oberfläche 40 des in der Verdampfungskammer 16 aufgenommenen Prozeßwasser 42 richtet. Die Leistung des Gebläses 36 ist dabei so ausgewählt, daß ein starke Wellenbildung in der Verdampfungskammer 16 erfolgt, wodurch die Oberfläche 40 um ein Vielfaches gegenüber einer ruhenden Wasseroberfläche vergrößert ist. Die Darstellung der welligen Oberfläche 40 in Fig. 1 ist lediglich schematisch. Es ist ferner der Fig. 1 zu entnehmen, daß der Luftstrahl 38 schräg zur Oberfläche 40 gerichtet ist, und etwa an einem seitlichen Endbereich der Verdampfungskammer 16 auf das Prozeßwasser 42 einwirkt. Dadurch entsteht neben der welligen Oberfläche 40 auch innerhalb des Prozeßwassers 42 eine Verwirbelung und eine entsprechend gute Vermischung, wie dies durch einen Pfeil 43 angedeutet ist.

An einer der Trennwand 14 gegenüberliegenden Seitenwand des Gehäuses 12 ist im Bereich des Bodens 22 ein Ablauf 44 vorgesehen, der mit einer außerhalb der Verdampfungskammer 16 angeordneten Steigleitung 46 in Verbindung steht, die etwa auf Höhe des Flüssigkeitsniveaus 70 in der Verdampfungskammer in einem etwa waagrechten Abschnitt 48 übergeht, der endseitig in eine nach unten abgeknickte Abführleitung 50 übergeht. Von dem hier nicht näher bezeichneten Auslaufende der Abführleitung 50 kann Prozeßwasser 42 aus der Verdampfungskammer 16 abgeführt werden, wie das durch einen Pfeil 52 angedeutet ist.

Im Bereich des waagrechten Abschnittes 48 ist eine Pumpe 54 angeordnet.

Eine Füllstandkontrolle 56 dient zur Erfassung des Füllstandes der Verdampfungskammer 16. Die Füllstandskontrolle 56 ist ferner mit einer in Nähe des Bodens 22 im Inneren der Verdampfungskammer 16 angeordneten Heizung 58 verbunden. Ferner ist die Füllstandskontrolle 56 über eine hier nicht näher dargestellte Steuerung mit der Pumpe 54 verbunden.

Die Füllstandskontrolle 56 dient dazu, einen optimalen Füllstand in der Verdampfungskammer 16 sicherzustellen, ferner dazu, bei einer erheblichen Überschreitung eines vorgegebenen Füllstandsniveaus für eine rasche Entleerung mittels der Pumpe 54 zu sorgen. Wird darüberhinaus über die Füllstandskontrolle 56 zugleich die Dichte bzw. die Konsistenz des in der Verdampfungskammer 16 enthaltenen Prozeßwassers 42 erfaßt, kann, bei Erreichen einer bestimmten Konzentration ein Entleerungsvorgang ausgelöst werden, wie das nachfolgend noch näher erläutert wird.

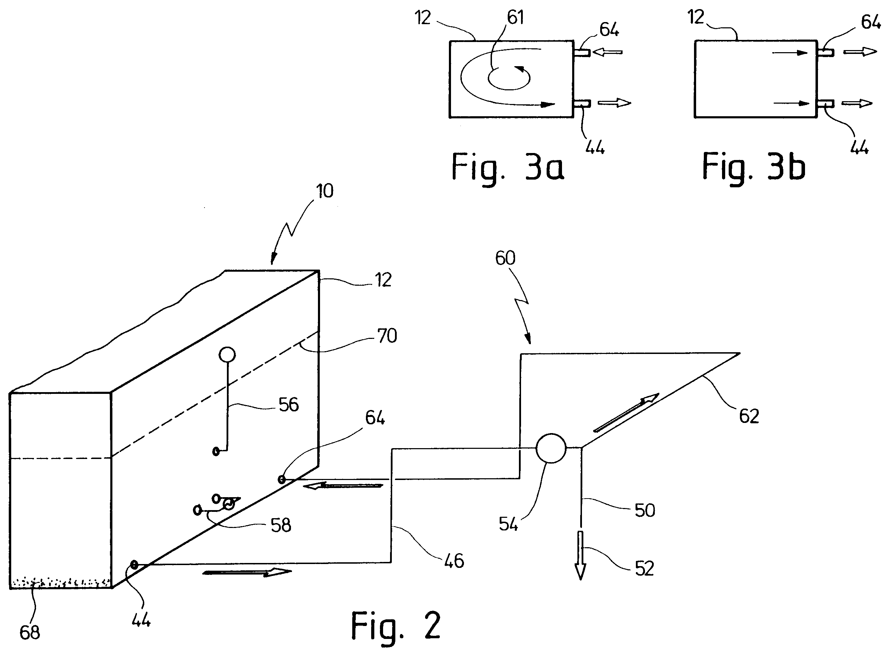

Wie insbesondere aus der perspektivischen Darstellung von Fig. 2 zu entnehmen, ist in Entleerrichtung stromabwärts der Pumpe 54 gesehen, eine Abzweigung 62 vorhanden, die zu einem Ein-/Auslaß 64 im Bereich des Bodens 22 der Verdampfungskammer 16 führt.

Der Sinn und Zweck der Abzweigung 62 wird nachfolgend noch in Zusammenhang mit der Arbeitsweise näher beschrieben.

In dem dargestellten Ausführungsbeispiel ist die Verdampfungskammer 16 so bemessen, daß darin etwa vier Liter Prozeßwasser 42 aufgenommen werden, und die Vorrichtung 10 ist so ausgerichtet, daß etwa acht Liter Wasser pro 24 Stunden bei etwa 40°C abgedampft werden können. Es können somit die Prozeßwässer von zwei der zuvor erwähnten Anlagen zugleich volumenreduziert werden.

Die Arbeitsweise der Vorrichtung ist wie folgt:
Über den Zulauf 28 wird ein Prozeßwasser 42, ein Entwickler aus einem fotographischen Prozeß der Vorkammer 18 zugeführt. Über die Öffnung 24 strömt dieses niveaugleich in die Verdampfungskammer 16. Wird ein bestimmtes Füllungsniveau 70 erreicht, wobei dies durch die Füllstandskontrolle 56 erfaßt wird, wird das Gebläse 36 in Betrieb genommen.

Derartige Prozeßwasser 42 aus fotographischen Prozessen weisen eine Temperatur von etwa 36°C auf. Da beim anfänglichen Befüllen der noch leeren Vorrichtung und den entsprechend pro Zeiteinheit relativ gering anfallenden Prozeßwässern eine Abkühlung durch Wärmeabstrahlung nicht ausgeschlossen werden kann, oder dies nur mit einem unverhältnismäßig großen Dämmaufwand möglich wäre, wird über die Heizung 58 die in der Vorrichtung aufgenommene Flüssigkeitsmenge auf etwa 40°C erwärmt.

Weisen die einlaufenden Prozeßwasser 42 Temperaturen unter 25°C auf, so wird das Gebläse 36 auf Unterdruck geschaltet, und zwar solange, bis die gewünschte Temperatur, beispielsweise 40°C erreicht wird. Während der Heizphase kann, um die Aufheizphase noch weiter zu verkürzen, die Flüssigkeitsmenge in der Verdampfungskammer 16 umgewälzt werden.

Im Volumenreduzierbetrieb sorgt der schräg auf die Oberfläche 40 gerichtete Luftstrahl 38 des Gebläses 36 für eine wellige Oberfläche 40. Zugleich wird eine intensive Vermischung bzw. Verwirbelung der Flüssigkeitsmenge in der Verdampfungskammer 16 erreicht (siehe Pfeil 43). Der Luftstrahl 38 reißt Wasserdampf mit sich und bewegt diesen in Richtung der Unterseite der Deckelwand 32. Eine gewisse Menge des mitgerissenen Dampfes kondensiert an der Unterseite als Wassertropfen 33 aus, die nach und nach längs der Neigung der geneigten Deckelwand 32 ablaufen bzw. zurückfallen, wie dies durch Pfeile 35 angedeutet ist. Das Luft-/Dampfgemisch tritt durch die Öffnungen 34 aus und kann entweder direkt der Umwelt zugeführt werden, oder, wie in Fig. 1 durch eine unterbrochene Linie angedeutet, über eine Sammelhaube 66 gesammelt über eine Leitung abgeführt werden. Dies hängt von den jeweiligen Örtlichkeiten ab.

Durch den Strömungswiderstand, den die Öffnungen 34 der durch das Gebläse 36 eingeführten Luftmenge entgegenstellt, entsteht in dem Luftraum der Verdampfungskammer 16 ein gegenüber dem äußeren Druck p_{A} erhöhter Druck p_{V}.

Ferner ist innerhalb dieses Luftraumes ein Druckgefälle vom Bereich unmittelbar in der Nähe der Oberfläche 40 zum Bereich der Deckelwand 32 vorhanden, das dadurch führt, daß im Bereich der Deckelwand 32, in dem der relativ geringere Druck herrscht, das Dampf-/Luftgemisch etwas expandiert und mit den herabfallenden Wassertropfen 33 sich vermischt und aus diesen weiteren Wassermengen mitreißt.

Sollten in dem Prozeßwasser 42 Feststoffpartikel vorhanden sein, die möglicherweise durch den Luft-/Dampfstrom mitgerissen werden, so werden diese zum überwiegenden Teil in den an der Unterseite der Deckelwand 32 kondensierenden Flüssigkeitstropfen 33 gesammelt und fallen wieder zurück in das Prozeßwasser 42 in der Verdampfungskammer 16. Es können daher nur sehr wenige Partikel durch die Öffnungen 34 mit in die Umwelt entrissen werden.

Stellt die Füllstandkontrolle 56 eine ausreichende Konzentrierung des Prozeßwassers 42 in der Verdampfungskammer 16 fest, wird die Pumpe 54 in Betrieb gesetzt, um die Verdampfungskammer 16 zu leeren. Eine derartige Entleerung der vier Liter Flüssigkeitsmenge ist in wenigen Sekunden zu erreichen. Je nach Größe der Öffnung 24 wird dabei auch die Vorkammer 18 mehr oder weniger entleert, je nachdem, wie dies gewünscht wird.

Es ist auch möglich, die Verdampfungskammer 16 in vorbestimmten Zeitintervallen zu entleeren.

Wie bereits erwähnt, ist die Pumpe 54 derart ausgestaltet, daß auch bei nicht in Betrieb genommener Pumpe 54 über diese Prozeßwasser 42 abfließen kann.

Treten somit geringe Schwankungen des Flüssigkeitsniveaus 70 über ein bestimmtes Niveau im geringen Ausmaße statt, so kann diese überschüssige Menge über die Steigleitung 46, die Pumpe 54 und die Ablaßleitung 50 abfließen, ohne daß dabei eine vollständige Entleerung stattfindet.

Dies wird dadurch erreicht, daß der horizontale Abschnitt 48 und die Abflußleitung 50 mit einem entsprechenden Durchmesser versehen werden, so daß Luft von dem Ende der Abführleitung 20 eintreten kann.

Die in Fig. 1 und 2 in ihrer Gesamtheit mit der Bezugsziffer 16 bezeichnete Entleervorrichtung dient auch dazu, um entweder kurz vor oder während des Entleerens der Verdampfungskammer 16 ein Umwälzen der Flüssigkeitsmenge in der Verdampfungskammer 16 zu bewerkstelligen, um möglicherweise im Bereich des Bodens 22 der Verdampfungskammer 16 abgesetzten Schlamm 68 (siehe Fig. 2) aufzuwühlen und abzuführen. Die Abzweigung 62, die von der Pumpe zum Ein-/Auslaß 64 der Verdampfungskammer 16 führt, weist einen größeren lichten Innendurchmesser auf, als die Abführleitung 50.

Wird daher die Pumpe 54 aktiviert, wird über die Steigleitung 46 von der Verdampfungskammer 16 abgeführte Flüssigkeit zum Teil über die Abzweigung 62 zurückgeführt und sorgt in der Verdampfungskammer 16 für eine intensive Verwirbelung, wie dies in Fig. 3a durch Pfeile 61 dargestellt ist. Dadurch wird Schlamm 68, der sich im Bereich des Bodens 22 der Verdampfungskammer 16 abgesetzt haben, aufgewirbelt. Dies kann beispielsweise durch Inbetriebsetzen der Pumpe 54 über einige Sekundenbereiche erzielt werden. Nach Abschalten der Pumpe 54 wird sowohl über die Steigleitung 46 als auch über die Abzweigung 62 eine rasche Entleerung der Verdampfungskammer 16 bewerkstelligt, wie das in Fig. 3b dargestellt ist, d.h. im Entleermodus dient der Stutzen 64 als Auslaß, wohingegen er im Umwälzmodus als Einlaß gedient hat.

Es ist ferner vorgesehen, in der Abführleitung 50 ein hier nicht näher dargestelltes Filtersystem vorzusehen, durch das Feststoffe aus der abgeführten Flüssigkeit ausgefiltert werden können. Auch aufgrund von zwischenzeitlich erfolgter Abkühlung aus dem abgeführten Prozeßwasser auskristallisierten Feststoffen können dadurch ausgefiltert werden. Von Zeit zu Zeit wird ein abnehmbarer Filterbehälter entnommen und einer Entsorgung und/oder Wiederaufarbeitung zugeführt. Der Filterbehälter kann anschließend wieder zurückgeführt und eingesetzt werden.

Zusammenfassend ist zu sagen, daß wasserhaltige Entsorgungslösungen vollautomatisch auf eine vorher/variabel festzulegende Restmenge mit bestimmbarer Dichte reduziert werden, wobei
- das System ökologisch unbedenklich arbeitet,
- mikroskopisch kleine Teile absorbiert und rückgeführt werden,
- höchste Verdampfungsraten durch Druckkammer und Oberflächenvergrößerung bei niederen Temperaturen (40°C) erreicht werden,
- die Reduzierung vollautomatisch auf einen vorher bestimmbaren Dichtewert und die
- automatische Entleerung des Systems in einen Entsorgungsbehälter erfolgt,
- eine Volumenreduzierung bis zu 90 % erreicht wird,
- die Anlage ist universell einsetzbar,
- automatische Nachfüllung, manuelle Nachfüllung oder
- direkter Maschinen-Anschluß (direkte Einleitung),
- geringer Inhalt (z.B. 6 Liter, 2 Liter in der Vorkammer, 4 Liter in der Verdampfungskammer), Heizung im Medium, so daß die Energiekosten auf ein Minimum reduziert werden.

## Patentansprüche

1. Vorrichtung zur Volumenreduzierung von wässerigem, nicht verdampfbaren Bestandteile enthaltendes Prozeßwasser (42), insbesondere Lösungen aus fotographischen Prozessen, mit einer Verdampfungskammer (16), in der das Prozeßwasser (42) durch Abdampfen von Wasser volumenreduzierbar und konzentrierbar ist, dadurch gekennzeichnet, daß der Verdampfungskammer (16) Luft derart zugeführt wird, daß eine Oberflächenvergrößerung des Prozeßwassers (42) erfolgt, und daß die Verdampfungskammer (16) mit zumindest einer Auslaßöffnung (34) versehen ist, deren Auslaßquerschnitt so bemessen ist, daß durch die der Verdampfungskammer zugeführte Luftmenge gegenüber der Außenwelt der Verdampfungskammer (16) ein Überdruck p_{V} entsteht.

2. Vorrichtung nach Anspruch 1, dadurch gekennzeichnet, daß der Verdampfungskammer (16) ein auf die Oberfläche (40) des darin enthaltenden Prozeßwassers (42) gerichteter Luftstrahl (38) zugeführt wird.

3. Vorrichtung nach Anspruch 2, dadurch gekennzeichnet, daß ein Gebläse (36) zur Zuführung des Luftstrahles (36) vorgesehen ist.

4. Vorrichtung nach einem der Ansprüche 1 bis 3, dadurch gekennzeichnet, daß die Verdampfungskammer (16) eine kontinuierlich beschickbare Kammer ist.

5. Vorrichtung nach einem der Ansprüche 1 bis 4, dadurch gekennzeichnet, daß eine Vorkammer (16) vorgesehen ist, der das Prozeßwasser (42) zugeführt wird, und daß die Vorkammer (18) bezüglich Flüssigkeiten kommunizierend mit der Verdampfungskammer (16) in Verbindung steht, jedoch gegenüber der der Verdampfungskammer (16) zugeführte Luftmenge getrennt ist.

6. Vorrichtung nach Anspruch 5, dadurch gekennzeichnet, daß die Vorkammer (18) und Verdampfungskammer (16) über eine Trennwand (14) getrennt sind, die zumindest eine unterhalb des Flüssigkeitsniveaus (70) liegende Öffnung (24) aufweist, über die die beiden Kammern (16, 18) kommunizieren.

7. Vorrichtung nach einem der Ansprüche 1 bis 6, dadurch gekennzeichnet, daß die Verdampfungskammer (16) eine geneigte Deckelwand (32) aufweist, die mit der zumindest einen Auslaßöffnung (34) versehen ist.

8. Vorrichtung nach Anspruch 7, dadurch gekennzeichnet, daß die geneigte Deckelwand (32) abnehmbar ist.

9. Vorrichtung nach Anspruch 7 oder 8, dadurch gekennzeichnet, daß der Austrittsquerschnitt der zumindest einen Auslaßöffnung (34) etwa 10 bis 20 % der Fläche der Deckelwand (32) beträgt.

10. Vorrichtung nach einem der Ansprüche 1 bis 9, dadurch gekennzeichnet, daß eine Heizung (58) vorgesehen ist, die im Prozeßwasser (42) angeordnet ist.

11. Vorrichtung nach Anspruch 10, dadurch gekennzeichnet, daß die Heizung (58) in der Verdampfungskammer (16) angeordnet ist.

12. Vorrichtung nach einem der Ansprüche 1 bis 11, dadurch gekennzeichnet, daß eine Entleervorrichtung (60) vorgesehen ist, die zugleich als Steigrohr/Schwerkraft-Überlaufsicherung ausgebildet ist.

13. Vorrichtung nach Anspruch 12, dadurch gekennzeichnet, daß vom Bodenbereich der Verdampfungskammer (16) eine Steigleitung (46) abführt, die auf Höhe des in der Verdampfungskammer (16) maximal vorgesehenen Flüssigkeitsniveau (70) nach unten abknickt und so bemessen ist, daß bei geringer Überschreitung des maximalen Flüssigkeitsniveaus (70) ein kontinuierlicher Ablauf gerade dieser überschüssigen Menge ermöglicht, bei starker Überschreitung jedoch eine vollständige Entleerung der Verdampfungskammer (16) verursacht.

14. Vorrichtung nach Anspruch 13, dadurch gekennzeichnet, daß in der Steigleitung (46) eine Pumpe (54) angeordnet ist, die, falls sie nicht in Betrieb befindlich ist, ein Durchlauf von Flüssigkeit ermöglicht.

15. Vorrichtung nach Anspruch 14, dadurch gekennzeichnet, daß stromabwärts der Pumpe (54) eine Abzweigung (62) von dem Entsorgungspfad vorgesehen ist, die zur Verdampfungskammer (16) rückgeführt ist, so daß bei Betätigung der Pumpe (54) ein Umwälzen der in der Verdampfungskammer (16) aufgenommenen Flüssigkeitsmenge von der Verdampfungskammer (16) über die Steigleitung (46) und die Abzweigung (62) möglich ist.

16. Vorrichtung nach einem der Ansprüche 12 bis 15, dadurch gekennzeichnet, daß die Entleervorrichtung (60) ein Filtersystem aufweist, durch das Feststoffe vom aus der Verdampfungskammer abgeführten Flüssigkeit ausgefiltert werden.

17. Vorrichtung nach Anspruch 16, dadurch gekennzeichnet, daß das Filtersystem einen abnehmbaren Filterbehälter aufweist, der zur Aufarbeitung und/oder Entsorgung des ausgefilterten Gutes getrennt handhabbar ist.

18. Verfahren zur Volumenreduzierung von wässerigem, nicht verdampfbare Bestandteile enthaltendes Prozeßwasser (42), insbesondere Lösungen aus fotographischen Prozessen, bei dem in einer Verdampfungskammer (16) durch Abdampfen von Wasser das Volumen des Prozeßwassers (42) reduziert und dieses dadurch konzentriert wird, dadurch gekennzeichnet, daß der Verdampfungskammer (16) Luft derart zugeführt wird, daß eine Oberflächenvergrößerung des Prozeßwassers (42) erfolgt, und, daß die zugeführt Luftmenge derart abgeführt wird, daß in der Verdampfungskammer (16) gegenüber der Außenwelt ein Überdruck p_{V} besteht.

19. Verfahren nach Anspruch 18, dadurch gekennzeichnet, daß der Verdampfungskammer (16) ein auf die Oberfläche (40) des darin enthaltenden Prozeßwassers (42) gerichteter Luftstrahl (38) zugeführt wird.

20. Verfahren nach Anspruch 18 oder 19, dadurch gekennzeichnet, daß der Verdampfungskammer (16) kontinuierlich so viel Prozeßwasser (42) zugeführt wird, wie gerade abdampft, und daß von Zeit zu Zeit, bei Erreichen des gewünschten Konzentrationsgrades, die Verdampfungskammer (16) entleert wird.

21. Verfahren nach einem der Ansprüche 18 bis 20, dadurch gekennzeichnet, daß mit einer Überlaufsicherung gearbeitet wird, die bei geringfügigen Übermengen an Prozeßwasser (42) in der Verdampfungskammer (16) ein Abführen gerade dieser Übermengen ermöglicht, bei größeren Übermengen jedoch für eine Entleerung der Verdampfungskammer (16) sorgt.

22. Verfahren nach einem der Ansprüche 18 bis 21, dadurch gekennzeichnet, daß bei einem Entleeren der Verdampfungskammer (16) zugleich oder vorgeschaltet das in der Verdampfungskammer (16) enthaltene Prozeßwasser (42) umgewälzt wird.

23. Verfahren nach einem der Ansprüche 18 bis 22, dadurch gekennzeichnet, daß bei warmem Prozeßwasser das Verfahren unmittelbar anschließend an den Prozeß unter Nutzung der Wärme des Prozeßwassers durchgeführt wird.

24. Verfahren nach einem der Ansprüche 18 bis 23, dadurch gekennzeichnet, daß bei Prozeßwasser aus fotographischen Prozessen im Bereich von 35° bis 40°C gearbeitet wird.

25. Verfahren nach einem der Ansprüche 18 bis 24, dadurch gekennzeichnet, daß bis zum Erreichen einer gewünschten Temperatur des Prozeßwassers (42) während einer Heizphase die Verdampfungskammer (16) mit Unterdruck betrieben wird.

26. Verfahren nach einem der Ansprüche 18 bis 25, dadurch gekennzeichnet, daß während einer Heizphase das Prozeßwasser (42) in der Verdampfungskammer umgewälzt wird.
